# EUROPEAN PATENT SPECIFICATION

(11) **EP 4 503 316 B1**
(45) Date of publication and mention of the grant of the patent: **24.06.2026**
(21) Application number: 23777868.3
(22) Date of filing: 16.03.2023
(51) Int. Cl.: H01M 50/528, H01M 10/04, H01M 10/052, H01M 10/0587, H01M 50/591, H01M 50/586, H01M 50/107, H01M 50/152, H01M 50/179, H01M 50/533, H01M 50/536, H01M 50/559

(54) **CYLINDRICAL BATTERY AND ASSEMBLY PROCESS THEREFOR**
ZYLINDRISCHE BATTERIE UND MONTAGEVERFAHREN DAFÜR
BATTERIE CYLINDRIQUE ET SON PROCÉDÉ D'ASSEMBLAGE

(30) Priority: 28.03.2022 CN 202210310721
(43) Date of publication of application: 05.02.2025
(73) Proprietor: Lanjing New Energy (Jiaxing) Co., Ltd., Jiaxing, Zhejiang 314011 (CN)
(72) Inventor: WANG, Ju, Jiaxing, Zhejiang 314011 (CN); GUO, Chuntai, Jiaxing, Zhejiang 314011 (CN); FENG, Shunan, Jiaxing, Zhejiang 314011 (CN); HE, Wei, Jiaxing, Zhejiang 314011 (CN)
(74) Representative: JD&P Patent Attorneys Joanna Dargiewicz & Partners
(86) International application number: PCT/CN2023/081910
(87) International publication number: WO 2023/185493

(56) References cited:
- CN-A- 101 443 936
- CN-A- 102 217 116
- CN-A- 114 628 767
- CN-U- 201 478 392
- CN-U- 201 478 392
- CN-U- 205 790 219
- JP-A- 2006 310 267
- JP-A- 2012 169 063
- US-A1- 2007 298 317

## Description

### TECHNICAL FIELD

The present disclosure belongs to the field of power battery technologies, and in particular, relates to a cylindrical battery and an assembly process thereof.

### BACKGROUND

The cover plate of a conventional cylindrical battery has a complex structure. When a cap serving as a positive electrode and a case serving as a negative electrode are assembled into a battery module, the positive electrode and the negative electrode are in a conductive connection from the two ends of the cylindrical battery. This is inconvenient for designing and welding of a busbar of an external module. In addition, a small quantity of tabs leads to impact on power performance of the battery. Some other cylindrical batteries have nickel-plated steel cases, and on the negative side, laser penetration welding is performed on a current collector on the negative electrode and the bottom of the case. However, the laser penetration welding cannot ensure that the current collector and the bottom of the case are attached, and penetration welding power needs to be adjusted a plurality of times, resulting in unfixed parameters, leading to a risk of damaging roll cores. In addition, aesthetics of the bottom of the case is affected by laser welding, and textures of stainless-steel nickel layers are damaged. This will damage corrosion resistance of stainless steel, and further affect service lives of the batteries. For some cylindrical batteries, ultrasonic welding or resistance welding is performed on the current collector on the negative electrode and the bottom of the case. In this welding manner, dust that cannot be cleared is generated, and large-current charging and discharging cannot be supported due to a too small welding spot, and therefore , power performance of the batteries is affected. In the conventional cylindrical battery, the roll core is fastened inside the case only through the rear lower edge of a roll groove, and a length error of the roll core results in axial movement of the roll core in the case, affecting the service life of the battery. In addition, the battery has problems of a plurality of assembling and welding processes, high investment, low efficiency, and high cost of a cell.

Chinese Patent Application (Publication No. CN 201478392 U) discloses a high-power power lithium-ion battery with a current collector plate includes a housing, a positive electrode sheet, a negative electrode sheet, a separator, an electrode tab, a cap, a current collector plate, an elastic body, an insulating sealing ring and an electrode post. The housing serves as one electrode, and the electrode tabs serve as the other electrode. One side of the end of the positive electrode sheet is provided with a positive electrode white border, and one side of the end of the negative electrode sheet is provided with a negative electrode white border, and the extension directions are opposite. The positive electrode sheet, the negative electrode sheet and the separator are wound together as a battery coil core.

United States Patent Application (Publication No. US 2007/298317 A1) discloses a cylindrical electrochemical cell which includes a first electrode and a second electrode which is a counter electrode to the first electrode, and an electrolyte. The first electrode includes a polyanion-based electrode active material.

Japanese Patent Application (Publication No. JP 2012169063 A) discloses An electrode group including a positive electrode, a negative electrode, and a first and a second separator and wound around an axis core is housed in a battery can. A nonaqueous electrolyte is injected from the upper part side of a hollow part of the axis core.

### SUMMARY OF PRESENT INVENTION

In view of this, an objective of the present disclosure is to disclose a cylindrical battery, to resolve the problems such as a plurality of processing procedures, complex assembly steps, and high costs due to a complex structure of an existing battery.

To achieve the above objective, the present disclosure adopts the following technical solution.

A cylindrical battery includes a case with an opening defined on an end of the case, and a conductive adhesive, a roll core, a current collector, an insulating element, and a cap arranged inside the case from bottom to top; the insulating element is sleeved on the current collector, the current collector is of a multi-petal structure, and comprises a positioning structure respectively connected to the roll core and the cap; when the positioning structure is respectively connected to the roll core and the cap, petal elements of the current collector are welded with the roll core, a conductive handle of the current collector is welded with the cap, a roll groove is defined on an outside of the case, the roll groove is positioned outside a current collector body, and a bottom of the roll core is fixedly connected to the case through the conductive adhesive.

Further, the conductive adhesive is a filling type thermosetting conductive adhesive.

Further, a cap center boss is disposed on a middle part of the cap, a liquid-injecting hole is defined in a center of the cap center boss, the cap center boss is bulged toward an inside of the roll core, a plurality of cap bosses are disposed on the cap, a groove direction of the cap bosses is identical to a groove direction of the cap center boss, and a ring of sealant is injection-molded at an edge of the cap to form a sealing ring.

Further, the cap is of an injection-molding integrated structure.

Further, the current collector includes the current collector body which is integrally-formed, a surface of the current collector body is uneven, a center boss is arranged on a middle part of the current collector body, one side of the current collector body is fixedly connected to the conductive handle, and a plurality of petal elements and a plurality of elastic sheets are uniformly distributed in a circumferential direction to form the multi-petal structure; the plurality of petal elements and the plurality of elastic sheets are symmetrically disposed on two sides of the conductive handle; and the conductive handle is capable of being bent, and the bent conductive handle is at an angle of 90° with the elastic sheet.

Further, the conductive handle is of a rectangular plate structure, a positioning hole is defined on an end part of the conductive handle, and symmetrical notches are defined on two sides of a middle part of the conductive handle.

Further, a number of the cap bosses and a number of the elastic sheets are both two, the two cap bosses are symmetrically disposed at an angle of 180°, the two elastic sheets are symmetrically disposed at an angle of 180°, and the two elastic sheets just press and fit the two cap bosses.

Further, the elastic sheet is of a polygonal structure, a side surface of the elastic sheet parallel to the current collector body is a plane, and an inner side of each of the two elastic sheets is a movable end and is provided with a flange.

Compared with the prior art, the cylindrical battery in the present disclosure has the following advantages:
(1) The cylindrical battery in the present disclosure has a small quantity of assembling mechanical parts, a small quantity of laser welding processes, is high in overall assembling efficiency, and low in cost.
(2) In the cylindrical battery in the present disclosure, the current collector is a positive side, and has the bendable elastic sheet in addition to leading out the conductive handle. The battery cell is pressed via the cap boss and the elastic sheet, so that not only battery shake due to a height error of the battery cell can be eliminated, but also bonding of the conductive adhesive can be not damaged.
(3) In the cylindrical battery in the present disclosure, the current collector on the negative side is cancelled, the thermosetting conductive adhesive is cured to connect the negative tab of the battery cell to the case, so that assembling is simple with high assembling efficiency. In addition, a large electrical-conduction and thermal-conduction area facilitates large-power use of the battery. Preferably, the thermosetting conductive adhesive is graphite-filled type thermosetting conductive adhesive, which is low in graphite cost, stable in an electrolyte environment, and has long-term reliability in electrical conductivity.

Another objective of the present disclosure is to provide an assembly process of the cylindrical battery, to resolve the problems such as a plurality of processing processes, complex assembling steps, and high cost due to a complex structure of an existing battery.

To achieve the above objective, the present disclosure adopts the following technical solution.

An assembly process of the cylindrical battery includes the following steps:
S1, winding positive and negative plates and an isolating membrane to form the roll core, and shaping a tab to form a stepped surface;
S2, laser-welding the current collector and an electrode of the roll core to form a roll core assembly;
S3, coating a layer of conductive adhesive on a bottom of the case;
S4, inserting a current collector-free side of the roll core assembly into the case;
S5, externally heating the case for heating and curing the conductive adhesive to connect to the bottom of the case, and pressing the roll core on a top;
S6, sleeving the insulating element on the current collector, squeezing an opening part of the case toward an axis of the case to form the roll groove;
S7, straightening the conductive handle of the current collector, pressing and welding the conductive handle with the cap bosses of the cap, and then bending the conductive handle, and covering, by the cap, the inside of the case at a position where the roll groove locates; and
S8, pressing the elastic sheets, and flanging and sealing the case.

Further, the conductive handle is first bent along a first direction to make the bent conductive handle perpendicular to the elastic sheet. Then, the conductive handle is further bent along a second direction opposite to the first direction at a position where a notch locates, so that the positioning hole is concentric with the center boss of the current collector. The center boss of the current collector is inserted into a center hole of the roll core, and the petal elements and the roll core are welded after being pressed.

Compared with the prior art, the assembly process of the cylindrical battery and the cylindrical battery have the same advantages as those in the prior art, which are not repeated here.

### BRIEF DESCRIPTION OF THE DRAWINGS

The accompanying drawings which constitute a part of the description of the present disclosure are intended to provide further understanding of the present disclosure. The exemplary embodiments of the present disclosure and descriptions thereof are intended to be illustrative of the present disclosure and do not constitute an undue limitation of the present disclosure. In the accompanying drawings:
FIG. 1 is an exploded view of a cylindrical battery according to an embodiment of the present disclosure;
FIG. 2 is a schematic diagram of a case according to an embodiment of the present disclosure;
FIG. 3 is a schematic diagram of a roll core according to an embodiment of the present disclosure;
FIG. 4 is a schematic diagram of a cap according to according to an embodiment of the present disclosure;
FIG. 5 is a schematic diagram of a current collector when a conductive handle is in an unbent state according to an embodiment of the present disclosure;
FIG. 6 is a top view of a current collector when a conductive handle is bent according to an embodiment of the present disclosure;
FIG. 7 is a sectional view along a direction A-A shown in FIG. 6;
FIG. 8 is a sectional view along a direction B-B shown in FIG. 6;
FIG. 9 is a schematic diagram of a roll core assembly according to an embodiment of the present disclosure;
FIG. 10 is a schematic diagram showing a roll core assembly mounted into a case according to an embodiment of the present disclosure;
FIG. 11 is a sectional view showing pressing and heating according to an embodiment of the present disclosure;
FIG. 12 is a sectional view showing a conductive handle and a cap welded together according to an embodiment of the present disclosure;
FIG. 13 is a sectional view showing a cap locked in a case according to an embodiment of the present disclosure;
FIG. 14 is a sectional view of a molded battery according to an embodiment of the present disclosure; and
FIG. 15 is a sectional view showing fitting of a cap boss and an elastic sheet according to an embodiment of the present disclosure.

Reference numerals:
1, case; 2, roll core; 3, current collector; 31, current collector body; 32, center boss; 33, elastic sheet; 34, petal; 35, conductive handle; 351, positioning hole; 352, reinforcing rib; 353, notch; 4, insulating element; 5, cap; 51, cap center boss; 52, anti-explosion valve; 53, cap boss; 54, sealant; 55, liquid-injecting hole; 6, conductive adhesive; 7, pressing block; 8, heating plate; and 9, roll groove.

### DETAILED DESCRIPTION OF THE EMBODIMENTS

It should be noted that embodiments in the present disclosure or features in the embodiments may be combined with one another without conflict.

It should be understood that in the description of the present disclosure, terms such as "central", "longitudinal", "transverse" "upper", "lower", "front", "rear", "left", "right" "vertical", "horizontal", "top", "bottom", "inside" and "outside" indicate the orientation or position relationships based on the drawings. They are merely intended to facilitate and simplify the description of the present disclosure, rather than to indicate or imply that the mentioned device or components must have a specific orientation or must be constructed and operated in a specific orientation. Therefore, these terms should not be construed as a limitation to the present disclosure. Moreover, terms such as "first" and "second" are used only for the purpose of description and cannot be understood as indicating or implying relative importance or implicitly indicating the number of technical features denoted. Thus, features defined with "first" and "second" may explicitly or implicitly include one or more of the features. In the description of the present disclosure, unless otherwise specified, "a plurality of" means at least two.

In the description of the present disclosure, it should be noted that, unless otherwise clearly specified, meanings of terms "mount", "connected with", and "connected to" should be understood in a board sense. For example, the connection may be a fixed connection, a removable connection, or an integral connection; may be a mechanical connection or an electrical connection; may be a direct connection or an indirect connection by using an intermediate medium; or may be intercommunication between two elements. A person of ordinary skill in the art may understand specific meanings of the above terms in the present disclosure based on a specific situation.

The present disclosure will be described in detail below with reference to the accompanying drawings and the embodiments.

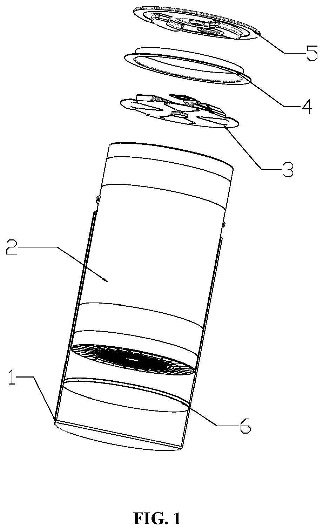

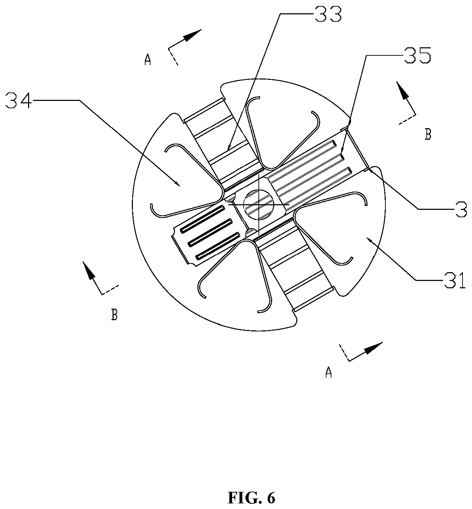

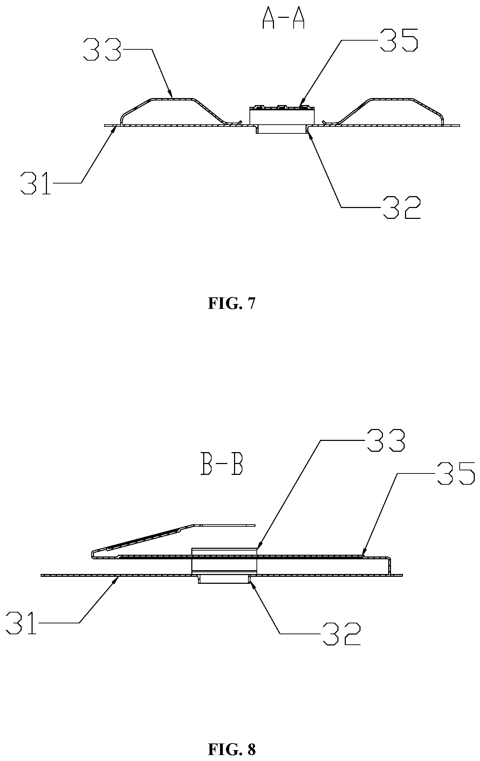

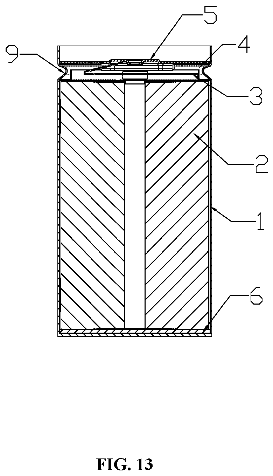

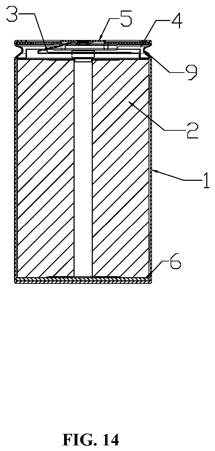

As shown in FIG. 1 to FIG. 15, a cylindrical battery includes a case 1, an opening is defined on an end of the case 1. A conductive adhesive 6, a roll core 2, a current collector 3, an insulating element 4, and a cap 5 are sequentially disposed inside the case 1 from bottom to top. The insulating element 4 is sleeved on the current collector 3. The current collector 3 is of a multi-petal structure, and is provided with a positioning structure respectively connected with the roll core 2 and the cap 5. After the positioning structure is respectively connected with the roll core 2 and the cap 5, petal elements 34 of the current collector 3 are welded with the roll core 2. A conductive handle 35 of the current collector 3 is welded with the cap 5. A roll groove 9 is defined on an outside of the case 1, and the roll groove 9 is arranged outside a current collector body 31. The bottom of the roll core 2 is fixedly connected to the case 1 through the conductive adhesive 6. In this solution, the battery has a small quantity of assembling mechanical parts, a small quantity of laser welding processes, is in high overall assembling efficiency, and is low in cost. The current collector on the negative electrode is cancelled, and the thermosetting conductive adhesive is cured to connect a negative electrode tab to the case, so that assembling is simple with high assembling efficiency. In addition, a large electrical-conduction and thermal-conduction area facilitates large-power use of the battery. Preferably, the thermosetting conductive adhesive is a graphite-filled thermosetting conductive adhesive, which is low in graphite cost, stable in an electrolyte environment, and has long-term reliability in electrical conductivity.

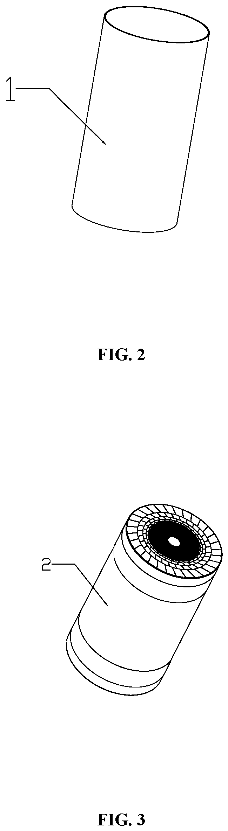

As shown in FIG. 1 and FIG. 3, the case 1 is of a hollow cylindrical structure with an opening at an end. The roll core 2 is of a multi-tab structure, and is formed into a stepped surface after being shaped, so that an area of contact between the conductive adhesive 6 and the tab is increased, and electrical-conduction and thermal-conduction performance is improved. The insulating element 4 is an insulating ring.

The conductive adhesive 6 may be a silver-series, copper-series or graphite/carbon black-filled type thermosetting conductive adhesive. A curing temperature of the conductive adhesive 6 is greater than or equal to 100°C. Preferably, thermosetting conductive adhesive is the graphite/carbon black-filled type thermosetting conductive adhesive, which is low in cost and is kept stable in the battery. An electrode of the roll core 2 and the conductive adhesive 6 are heated and pressurized for being bonded, and therefore, electrical conduction and thermal conduction are achieved.

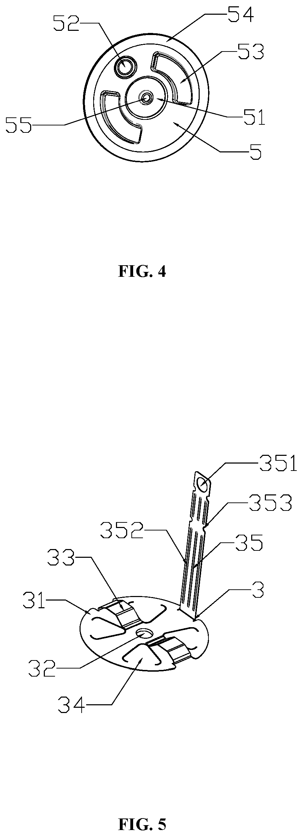

As shown in FIG. 4, the cap 5 is of an injection-molded structure. The cap 5 is of a circular disc structure. A cap center boss 51 is disposed on the middle part of the cap 5. A liquid-injecting hole 55 is defined in the center of the cap center boss 51. The liquid-injecting hole 55 is configured to: inject a liquid and exhaust gas after the liquid is gasified for a first time, and supplement electrolyte after initial charging. The cap center boss 51 is bulged toward the inside of the roll core 2, so as to fit a positioning hole 351 of the current collector for positioning and welding quickly. The cap 5 is provided with a cap boss 53. A groove direction of the cap boss 53 is identical to that of the cap center boss 51. When the cap 5 is sealed, an elastic sheet 33 on the current collector 3 can be pressed to fasten the roll core 2. A ring of sealant 54 is injection-molded at the edge of the cap 5, to form a sealing ring. Preferably, the cap 5 and the sealing ring 51 are formed through integral injection molding.

An anti-explosion valve 52 is disposed on the cap 5, and is configured to release pressure when the battery is abnormal, to achieve safety protection.

As shown in FIG. 5 to FIG. 8, the positioning structure of the current collector 3 is the center boss 32 and the conductive handle 35. Specifically, the current collector 3 includes the current collector body 31, the center boss 32, the elastic sheets 33, the petal elements 34, and the conductive handle 35 that are of an integrated structure. The surface of the current collector body 31 is uneven, and the center boss 32 is disposed on the middle part of the current collector body 31. One side of the current collector body 31 is fixedly connected with the conductive handle 35, and is uniformly distributed with the plurality of petal elements 34 and the plurality of elastic sheets 33 in the circumferential direction of the current collector to form a multi-petal structure. In addition, the plurality of petal elements 34 and the plurality of elastic sheets 33 are symmetrically disposed on the two sides of the conductive handle 35. The conductive handle 35 can be bent, and the conductive handle 35 and the elastic sheet 33 are die-cut at an angle of 90°. In this case, a direction in which the conductive handle 35 is bent after the conductive handle 35 is welded with the cap center boss 51 just falls in a gap between two cap bosses 53 that are pressed by the cap 5. This avoids interference between the conductive handle 35 and the cap bosses 53, and saves height space. The current collector 3 is a positive side, and has the foldable elastic sheet 33 in addition to leading out the conductive handle 35. The roll core 2 is pressed via the cap boss 53 and the elastic sheet 33, so that not only battery shake due to a height error of the roll core 2 can be eliminated, but also bonding of the conductive adhesive 6 can be not damaged.

In an embodiment, there are four petal elements 34, and two elastic sheets 33. each two petal elements 34 and one elastic sheet 33 are located on a same side of a center line of the conductive handle 35, and the elastic sheet 33 is located between the two petal elements 34.

The conductive handle 35 is of a rectangular plate structure. A positioning hole 351 is provided on the end part of the conductive handle 35. The positioning hole 351 is configured to fit the cap center boss 51 of the cap 5 for quickly positioning and welding. Notches 353 that are symmetrical in position are provided on the middle part of the conductive handle 35, to facilitate directional bending of the conductive handle 35. A plurality of reinforcing ribs 325 is disposed on the side surface of the conductive handle 35.

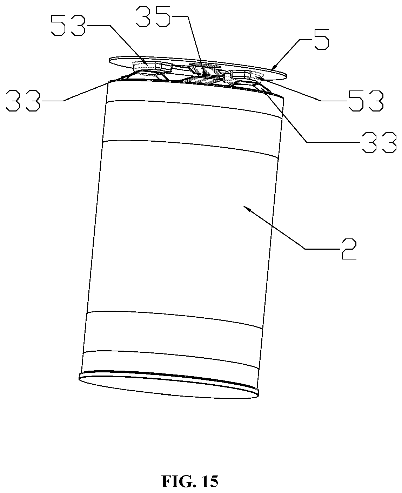

As shown in FIG. 15, preferably, two cap bosses 53 are of a semicircular symmetrical structure. Specifically, the two cap bosses 53 are symmetrically disposed at an angle of 180°. Two elastic sheets 33 are symmetrically disposed at an angle of 180°, to just fit and press the cap bosses 53 that are symmetrically disposed at an angle of 180°, and avoid the conductive handle 35.

The effect of the elastic sheets 33 is as follows: After the cap is closed, the two elastic sheets 33 that are symmetrically disposed at an angle of 180° fit and press the cap bosses 53 that are symmetrically disposed at an angle of 180° to press the roll core 2, so that on one hand, thermal conduction and electrical conduction are achieved, on the other hand, the roll core 2 is fastened to prevent movement in a height direction of a battery cell. In addition, the roll core 2 can be pressed, so that the thermosetting conductive adhesive 6 keeps good adhesive property in use.

The petal 34 is formed by punching via the current collector 3. The petal 34 is configured to be welded with a roll core tab. The elastic sheet 33 is configured to eliminate a height error of the battery cell, to prevent movement. In addition, the roll core 2 is pressed to prevent the thermosetting conductive adhesive 6 from being damaged due to pulling in a use process.

Preferably, the current collector body 31 and the elastic sheet 33 are of an integrated structure. The elastic sheet 33 is of a polygonal structure. A side surface, parallel to the current collector body 31, of the elastic sheet 33 is a plane, to facilitate contact with the cap 5, ensuring stability of contact. The inner side of the elastic sheet 33 is a movable end with a flange. When the elastic sheet 33 is squeezed, the inner side of the elastic sheet 33 extends inward, and an area of the current collector body 31 is not increased. This helps save space.

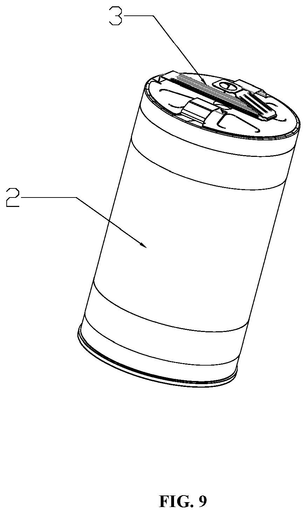

As shown in FIG. 9 to FIG. 14, an assembly process of a cylindrical battery includes the following steps.

As shown in FIG. 9, in step S1, the roll core 2 is formed by winding positive and negative plates and an isolating membrane, and a tab is shaped to form a stepped surface, so that an area of contact between the conductive adhesive 6 and the tab is increased, and electrical-conduction and thermal-conduction performance is improved.

In step S2, the current collector 3 and an electrode of the roll core 2 are laser-welded to form a roll core assembly. A punched multi-petal structure facilitates positioning, pressing and welding with the roll core 2.

Specifically, the conductive handle 35 is bent along a first direction, and the bent conductive handle 35 is perpendicular to the elastic sheet 33, and then is further bent along a second direction at a position where the notch 353 locates. In this case, the positioning hole 351 and the center boss 32 are concentric. The center boss 32 is inserted into a center hole of the roll core 2, and the petal elements 34 are welded with the roll core 2 after being pressed. The center boss 32 facilitates positioning of the current collector 3 and the roll core 2.

In step S3, a layer of thermosetting conductive adhesive 6, preferably, graphite/carbon black-filled type thermosetting conductive adhesive is coated on the bottom of the case 1, which is low in cost and is kept stable in the battery.

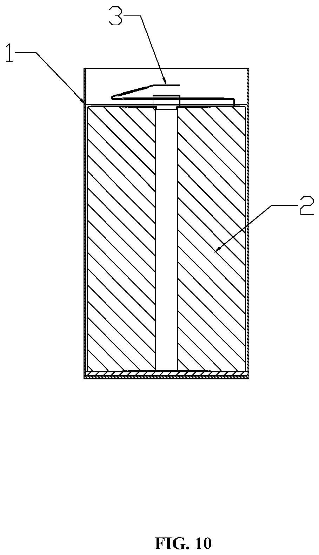

As shown in FIG. 10, in step S4, a current collector-free side of the roll core assembly is inserted into the case 1.

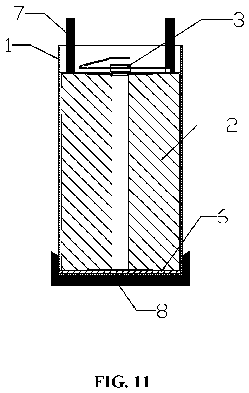

As shown in FIG. 11, in step S5, the case 1 is put on a heating plate 8 outside, and the heating plate 8 is configured to heat the bottom of the case 1, so that the conductive adhesive 6 is heated and cured to connect to the bottom of the case, and does not need to be welded with the case 1 (the roll core 2 is heated, pressurized and bonded through the conductive adhesive 6, so as to perform electrical conduction and thermal conduction). On the top of the case, the roll core 2 is pressed via a pressing block 7. This greatly simplifies the manufacturing process and operation steps.

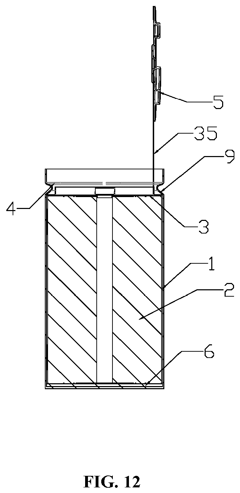

As shown in FIG. 12 to FIG. 14, in step S6, after the insulating element 4 is mounted on (on the positive side of) the current collector 3, an opening part of the case 1 is squeezed toward the axis via an external tool to form the roll groove 9. This processing process is simple and direct, and is high in efficiency.

In step S7, then, the conductive handle 35 of the current collector is straightened, and is pressed and welded with the cap boss 53 of the cap 5; the conductive handle 35 is then further bent according to the method described in the step S2; and the cap 5 covers the inside of the case at a position where the roll groove 9 locates.

Specifically, the conductive handle 35 is welded with the cap boss 53, to realize electrical-conduction and thermal-conduction connection.

The conductive handle 35 and the elastic sheet 33 are die-cut at an angle of 90°, so that a direction in which the conductive handle 35 is bent after being welded with the cap center boss 51 is just in a gap of two cap bosses 53 pressed by the cap 5. The elastic sheets 33 with flanges are 180° symmetrical structures, and just fit and press the 180° symmetrical cap bosses 53

In step S8, the elastic sheet 33 is pressed and the case 1 is flanged and sealed, to prevent the roll core 2 from moving.

Specifically, the effect of the elastic sheet 33 is: After the cap is closed, the two 180° symmetrical elastic sheets 33 fit the two 180° symmetrical cap bosses 53 to press the roll core 2, so that on one hand, thermal conduction and electrical conduction are implemented, on the other hand, the roll core 2 is fastened to prevent the battery cell from moving in a height direction. The cylindrical battery disclosed in the present disclosure is simple in structure, strong in flow-through capacity, and suitable for large-rate charging and discharging. In addition, the cylindrical battery is simple in assembly process, and low in manufacturing cost.

## Claims

1. A cylindrical battery, comprising a case (1) with an opening defined on an end of the case (1), a conductive adhesive (6), a roll core (2), a current collector (3), an insulating element (4), and a cap (5);
wherein the conductive adhesive (6), the roll core (2), the current collector (3), the insulating element (4), and the cap (5) are arranged inside the case (1) from bottom to top;
the insulating element (4) is sleeved on the current collector (3);
the current collector (3) comprises a integrally-formed current collector body (31), and a positioning structure respectively connected to the roll core (2) and the cap (5); the positioning structure comprises a center boss (32) and a conductive handle (35); the current collector body (31) is of a multi-petal structure with the center boss (32) arranged in a middle part thereof, and a plurality of petal elements (34) and two elastic sheets (33) uniformly distributed in a circumferential direction thereof; the conductive handle (35) is fixedly connected to one side of the current collector body (31); the plurality of petal elements (34) and the two elastic sheets (33) are symmetrically disposed on two sides of the conductive handle (35); the conductive handle (35) is capable of being bent; and after being bent, the conductive handle (35) is at an angle of 90° with each of the two elastic sheets (33); the conductive handle (35) is of a rectangular plate structure, a positioning hole(351) is defined in an end part of the conductive handle (35), and symmetrical notches (353) are defined on two sides of a middle part of the conductive handle (35); a surface of the current collector body (31) is uneven; when the positioning structure is respectively connected to the roll core (2) and the cap (5), petal elements (34) of the current collector (3) are welded with the roll core (2), and a conductive handle (35) of the current collector (3) is welded with the cap (5);
a roll groove (9) is defined on an outside of the case (1), and the roll groove (9) is positioned outside the current collector body (31);
a bottom of the roll core (2) is fixedly connected to the case (1) through the conductive adhesive (6), and the conductive adhesive (6) is a filling type thermosetting conductive adhesive;
a cap center boss (51) is disposed on a middle part of the cap (5), a liquid-injecting hole (55) is defined in a center of the cap center boss (51), the cap center boss (51) is bulged toward an inside of the roll core (2), two cap bosses (53) are disposed on the cap (5), a groove direction of the two cap bosses (53) is identical to a groove direction of the cap center boss (51);
a ring of sealant (54) is injection-molded at an edge of the cap (5) to form a sealing ring;
the two cap bosses (53) are symmetrically disposed at an angle of 180°, the two elastic sheets (33) are symmetrically disposed at an angle of 180°, and the two elastic sheets (33) just press and fit the two cap bosses (53); and each of the two elastic sheets (33) is of a polygonal structure, a side surface of each of the two elastic sheets (33) parallel to the current collector body (31) is a plane, and an inner side of each of the two elastic sheets (33) is a movable end and is provided with a flange.

2. The cylindrical battery according to claim 1, wherein the cap (5) is an injection-molding integrated structure.

3. An assembly process of the cylindrical battery according to claim 1, comprising the following steps:
S1, winding positive and negative plates and an isolating membrane to form the roll core (2), and shaping a tab to form a stepped surface;
S2, laser-welding the current collector (3) and an electrode of the roll core (2) to form a roll core assembly;
S3, coating a layer of conductive adhesive (6) on a bottom of the case (1);
S4, inserting a current collector-free side of the roll core assembly into the case (1);
S5, externally heating the case (1) for heating and curing the conductive adhesive (6) to connect to the bottom of the case (1), and pressing the roll core (2) on a top;
S6, sleeving the insulating element (4) on the current collector (3), squeezing an opening part of the case (1) toward an axis of the case (1) to form the roll groove;
S7, straightening the conductive handle (35) of the current collector (3), pressing and welding the conductive handle (35) with the cap bosses (53) of the cap (5), and then bending the conductive handle (35) along a first direction to make the bent conductive handle (35) perpendicular to the two elastic sheets (33); further bending the conductive handle (35) at a position where a notch (353) locates along a second direction opposite to the first direction to make the positioning hole (351) concentric with the center boss (32) of the current collector (3); inserting the center boss (32) of the current collector (3) into a center hole of the roll core (2), and pressing and welding the petal elements (34) and the roll core (2); and covering an inside of the case (1) with the cap (5) at a position where the roll groove locates; and
S8, pressing the elastic sheets (33), and flanging and sealing the case (1).

## Patentansprüche

1. Zylindrische Batterie, umfassend ein Gehäuse (1) mit einer an einem Ende des Gehäuses (1) ausgebildeten Öffnung, einen leitfähigen Klebstoff (6), einen Wickelkern (2), einen Stromsammler (3), ein Isolierelement (4) und einen Deckel (5),
wobei der leitfähige Klebstoff (6), der Wickelkern (2), der Stromsammler (3), das Isolierelement (4) und der Deckel (5) im Inneren des Gehäuses (1) von unten nach oben angeordnet sind;
das Isolierelement (4) auf den Stromsammler (3) aufgeschoben ist;
der Stromsammler (3) einen einstückig ausgebildeten Stromsammlerkörper (31) und eine Positionierungsstruktur umfasst, die jeweils mit dem Wickelkern (2) und dem Deckel (5) verbunden ist; die Positionierungsstruktur einen mittigen Vorsprung (32) und einen leitfähigen Griff (35) umfasst; der Stromsammlerkörper (31) eine mehrblättrige Struktur mit dem in einem Mittelbereich davon angeordneten mittigen Vorsprung (32), mehreren Blattelementen (34) und zwei elastischen Blechen (33), die in einer Umfangsrichtung davon gleichmäßig verteilt sind, aufweist; der leitfähige Griff (35) fest mit einer Seite des Stromsammlerkörpers (31) verbunden ist; die mehreren Blattelemente (34) und die zwei elastischen Bleche (33) symmetrisch an zwei Seiten des leitfähigen Griffs (35) angeordnet sind; der leitfähige Griff (35) biegbar ist und der leitfähige Griff (35) nach dem Biegen mit jedem der zwei elastischen Bleche (33) einen Winkel von 90° bildet; der leitfähige Griff (35) eine rechteckige Plattenstruktur aufweist, in einem Endabschnitt des leitfähigen Griffs (35) ein Positionierungsloch (351) ausgebildet ist und an zwei Seiten eines Mittelbereichs des leitfähigen Griffs (35) symmetrische Aussparungen (353) ausgebildet sind; eine Oberfläche des Stromsammlerkörpers (31) uneben ist; wenn die Positionierungsstruktur jeweils mit dem Wickelkern (2) und dem Deckel (5) verbunden ist, Blattelemente (34) des Stromsammlers (3) mit dem Wickelkern (2) verschweißt sind und der leitfähige Griff (35) des Stromsammlers (3) mit dem Deckel (5) verschweißt ist;
an einer Außenseite des Gehäuses (1) eine Rollnut (9) ausgebildet ist und die Rollnut (9) außerhalb des Stromsammlerkörpers (31) positioniert ist;
ein Boden des Wickelkerns (2) mittels des leitfähigen Klebstoffs (6) fest mit dem Gehäuse (1) verbunden ist und der leitfähige Klebstoff (6) ein wärmehärtender leitfähiger Füllklebstoff ist;
an einem Mittelbereich des Deckels (5) ein mittiger Deckelvorsprung (51) angeordnet ist, in einem Zentrum des mittigen Deckelvorsprungs (51) ein Flüssigkeitseinfüllloch (55) ausgebildet ist, sich der mittige Deckelvorsprung (51) zu einem Inneren des Wickelkerns (2) hin wölbt, an dem Deckel (5) zwei Deckelvorsprünge (53) angeordnet sind und eine Nutrichtung der zwei Deckelvorsprünge (53) mit einer Nutrichtung des mittigen Deckelvorsprungs (51) identisch ist;
an einem Rand des Deckels (5) ein Ring aus Dichtungsmittel (54) angespritzt ist, um einen Dichtring zu bilden;
die zwei Deckelvorsprünge (53) symmetrisch in einem Winkel von 180° angeordnet sind, die zwei elastischen Bleche (33) symmetrisch in einem Winkel von 180° angeordnet sind und die zwei elastischen Bleche (33) die zwei Deckelvorsprünge (53) gerade anpressen und mit diesen passgenau zusammenwirken; und jedes der zwei elastischen Bleche (33) eine polygonale Struktur aufweist, eine zu dem Stromsammlerkörper (31) parallele Seitenfläche jedes der zwei elastischen Bleche (33) eine Ebene ist und eine Innenseite jedes der zwei elastischen Bleche (33) ein bewegliches Ende ist und mit einem Flansch versehen ist.

2. Zylindrische Batterie nach Anspruch 1, wobei der Deckel (5) als einstückige Spritzgussstruktur ausgebildet ist.

3. Montageverfahren der zylindrischen Batterie nach Anspruch 1, umfassend die folgenden Schritte:
S1, Aufwickeln positiver und negativer Elektrodenplatten und einer Isoliermembran zur Bildung des Wickelkerns (2) und Formen einer Polfahne zur Bildung einer abgestuften Oberfläche;
S2, Laserschweißen des Stromsammlers (3) und einer Elektrode des Wickelkerns (2) zur Bildung einer Wickelkernbaugruppe;
S3, Aufbringen einer Schicht des leitfähigen Klebstoffs (6) auf einen Boden des Gehäuses (1);
S4, Einsetzen einer stromsammlerfreien Seite der Wickelkernbaugruppe in das Gehäuse (1);
S5, äußeres Erwärmen des Gehäuses (1), um den leitfähigen Klebstoff (6) zu erwärmen und auszuhärten, sodass dieser mit dem Boden des Gehäuses (1) verbunden wird, und Andrücken des Wickelkerns (2) von oben;
S6, Aufschieben des Isolierelements (4) auf den Stromsammler (3), Zusammendrücken eines Öffnungsabschnitts des Gehäuses (1) in Richtung einer Achse des Gehäuses (1), um die Rollnut zu bilden;
S7, Geraderichten des leitfähigen Griffs (35) des Stromsammlers (3), Andrücken und Verschweißen des leitfähigen Griffs (35) mit den Deckelvorsprüngen (53) des Deckels (5) und anschließendes Biegen des leitfähigen Griffs (35) entlang einer ersten Richtung, sodass der gebogene leitfähige Griff (35) senkrecht zu den zwei elastischen Blechen (33) steht; weiteres Biegen des leitfähigen Griffs (35) an einer Position, an der sich eine Aussparung (353) befindet, entlang einer der ersten Richtung entgegengesetzten zweiten Richtung, sodass das Positionierungsloch (351) konzentrisch mit dem mittigen Vorsprung (32) des Stromsammlers (3) ist; Einsetzen des mittigen Vorsprungs (32) des Stromsammlers (3) in ein Mittelloch des Wickelkerns (2) und Andrücken und Verschweißen der Blattelemente (34) mit dem Wickelkern (2); und Abdecken eines Inneren des Gehäuses (1) mit dem Deckel (5) an einer Position, an der sich die Rollnut befindet; und
S8, Andrücken der elastischen Bleche (33) sowie Umbördeln und Abdichten des Gehäuses (1).

## Revendications

1. Une batterie cylindrique, **caractérisée en ce qu'**elle comprend: un boîtier (1) pourvu d'une ouverture à une extrémité, un adhésif conducteur (6), un noyau enroulé (2), un collecteur de courant (3), un élément isolant (4) et un capuchon (5);
dans laquelle l'adhésif conducteur (6), le noyau enroulé (2), le collecteur de courant (3), l'élément isolant (4) et le capuchon (5) sont disposés à l'intérieur du boîtier (1) de bas en haut;
l'élément isolant (4) étant emmanché à l'extérieur du collecteur de courant (3);
le collecteur de courant (3) comprennent un corps de collecteur de courant (31) formé d'un seul tenant, ainsi qu'une structure de positionnement comportant un bossage central (32) et une poignée conductrice (35); ladite structure de positionnement étant respectivement reliée au noyau enroulé (2) et au capuchon (5); le corps de collecteur de courant (31) étant en form d'une structure multipétale avec le bossage central (32) disposé dans une partie médiane du corps, et une pluralité d'éléments en forme de pétales (34) ainsi que deux feuilles élastiques (33) répartis uniformément dans une direction circonférentielle ; la poignée conductrice (35) étant connectée de manière fixeé à un côté du corps de collecteur de courant (31); la pluralité de pétales (34) et les deux lames élastiques (33) étant disposés symétriquement de part et d'autre de la poignée conductrice (35) ; la poignée conductrice (35) pouvant être pliée et, après pliage, former un angle de 90° avec chacune des deux feuilles élastiques (33); la poignée conductrice (35) étant en form d'une structure de plaque rectangulaire, un trou de positionnement (351) étant ménagé dans une partie d'extrémité de la poignée conductrice (35), et des encoches (353) symétriques étant ménagées sur deux côtés d'une partie médiane de la poignée conductrice (35); la surface du corps de collecteur de courant (31) étant inégale; lorsque ladite structure de positionnement étant respectivement reliée au noyau enroulé (2) et au capuchon (5), les pétales (34) du collecteur de courant (3) étant soudés au noyau enroulé (2), et la poignée conductrice (35) du collecteur de courant (3) étant soudée au capuchon (5);
une gorge de roulement (9) étant ménagée à l'extérieur du boîtier (1), et la gorge de roulement (9) étant située à l'extérieur du corps de collecteur de courant (31);
le fond du noyau enroulé (2) étant connectée de manière fixeé au boîtier (1) par l'intermédiaire de l'adhésif conducteur (6); l'adhésif conducteur (6) étant un adhésif conducteur thermodurcissable de type à remplissage ;
le capuchon (5) étant pourvu en son milieu d'un bossage central de capuchon (51), le centre du bossage central de capuchon (51) étant pourvu d'un trou d'injection de liquide (55), le bossage central de capuchon (51) étant bombé vers l'intérieur du noyau enroulé (2), le capuchon (5) comportant deux bossages de capuchon (53), la direction des rainures des deux bossages de capuchon (53) étant identique à la direction des rainures du bossage central de capuchon (51);
une bague de produit d'étanchéité (54) étant surmoulée par injection sur le bord du capuchon (5) pour former un joint d'étanchéité;
les deux bossages de capuchon (53) étant disposés symétriquement à 180°, les deux feuilles élastiques (33) étant disposées symétriquement à 180°, et les deux feuilles élastiques (33) coopèrent exactement avec les deux bossages de capuchon (53) en les comprimant; chaque feuille élastique (33) étant en form d'une structure polygonale, la face latérale de la feuille élastique (33) parallèle au corps de collecteur de courant (31) étant plane, et le côté intérieur de la feuille élastique (33) étant une extrémité mobile et pourvu d'un rebord.

2. La batterie cylindrique selon la revendication 1, **caractérisée en ce que** le capuchon (5) est une structure d'un seul tenant obtenue par surmoulage par injection.

3. Un procédé d'assemblage de la batterie cylindrique selon l'une quelconque des revendications 1 à 2, **caractérisé en ce qu'**il comprend les étapes suivantes:
S1, enrouler une feuille d'électrode positive, une feuille d' électrode négative et une membrane isolante pour former le noyau enroulé (2), et effectuer le façonnage d'une languette pour former une surface en gradin;
S2, souder au laser le collecteur de courant (3) sur une électrode du noyau enroulé (2) pour former un ensemble noyau enroulé ;
S3, appliquer une couche d'adhésif conducteur (6) sur le fond du boîtier (1);
S4, insérer le côté sans collecteur de courant de l'ensemble noyau enroulé dans le boîtier (1);
S5, chauffer extérieurement le boîtier (1) pour faire durcir l'adhésif conducteur (6) par chauffage, afin de le relier au fond du boîtier (1), et presser le noyau enroulé (2) sur le dessus;
S6, après avoir monté l'élément isolant (4) sur le collecteur de courant (3), comprimer la partie ouverte du boîtier (1) en direction de l'axe du boîtier (1) pour former la gorge de roulement;
S7, ensuite, redresser la poignée conductrice (35) du collecteur de courant (3), et la presser et souder aux bossages de capuchon (53) du capuchon (5); après soudage, plier la poignée conductrice (35) le long d'une première direction, de sorte qu'après pliage, la poignée conductrice (35) soit perpendiculaire aux feuilles élastiques (33) ; puis, au niveau des encoches (353), plier la poignée conductrice (35) selon une seconde direction opposée à la première direction, de sorte que le trou de positionnement (351) devienne concentrique avec le bossage central (32) ; insérer le bossage central (32) dans le trou central du noyau enroulé (2), presser les pétales (34) contre le noyau enroulé (2) puis les souder ; et mettre le capuchon (5) à l'intérieur du boîtier (1) au niveau d'un emplacement où la gorge de roulement se trouve; et
S8, presser les feuilles élastiques (33), et réaliser le sertissage et l'étanchéité du boîtier (1) par rabattement de bord..
